# EUROPEAN PATENT SPECIFICATION

(11) **EP 1 873 052 B1**
(45) Date of publication and mention of the grant of the patent: **10.06.2009**
(21) Application number: 07012084.5
(22) Date of filing: 20.06.2007
(51) Int. Cl.: B63B 21/00, B63B 43/18

(54) **Automatic mooring system**
Automatisches Vertäuungssystem
Système d'amarrage automatique

(30) Priority: 22.06.2006 EP 06425426
(43) Date of publication of application: 02.01.2008
(73) Proprietor: Food & Food di Morelli Stefano Impresa Individuale, 10040 Pralormo (TO) (IT)
(72) Inventor: Morelli, Stefano, 10040 Pralormo (TO) (IT)
(74) Representative: Lotti, Giorgio

(56) References cited:
- DE-A1- 19 754 582
- US-A- 4 290 043
- US-A1- 2003 137 443
- US-A1- 2004 153 222
- US-A1- 2004 221 468
- US-B1- 6 469 664

## Description

One of the biggest problems for the pilots of recreational vessels of various displacements and sizes is represented by the difficulties rising from the control of the manoeuvring means during mooring and docking operations in the harbours. In some situations, in fact, very good skill and experience are required while controlling the speed of the engines of the two motors equipped vessels, in order to perform the low speed manoeuvres typical of docking operations in little berthing areas or in presence of a few obstacles (e.g. in the vicinity of other moored vessels). A docking information system for boats is known from US 2003/0137443. For bigger vessels, furthermore, is very difficult to have visibility and control contemporarily on all the sides of the vessel, which are necessary to avoid collisions with any kind of obstacle between the hull and the berthing deck. The bigger are the dimensions of the vessels, the bigger are such problems. Even more complex is the manoeuvre for vessels equipped with one engine and the rudder (e.g. sailing boats).
In order to dramatically reduce such difficulties, an innovative automatic docking system is proposed, which aids the pilot during the mooring and berthing manoeuvres.

The system presented with the present invention is based on the integration of the following functional units:
1. Array of new generation ultrasonic sensors (wireless option)
2. Array of laser sensors (wireless option)
3. Array of electronic gyroscopic sensors (wireless option)
4. Electronic bitt, installed in the docking quay, self-powered with solar cells
5. Electronic data acquisition unit (hardware and software) - equipped with receiver option from wireless sensors - radio link radio with sensors' arrays
6. Dedicated radio link radio between electronic on board unit and electronic bitt (radio guide)
7. Auxiliary asynchronous electric motors, controlled by variable speed drives
8. Power drive system, suitable to drive also other electric motors (e.g. bow thrusters' electric pumps) if available on the vessel equipped with the Automatic Mooring System
9. Electro mechanic group for the insertion of the electric motors and the exclusion of main engines
10. Interface for other signals available on the vessel (anemometers, GPS, etc.)

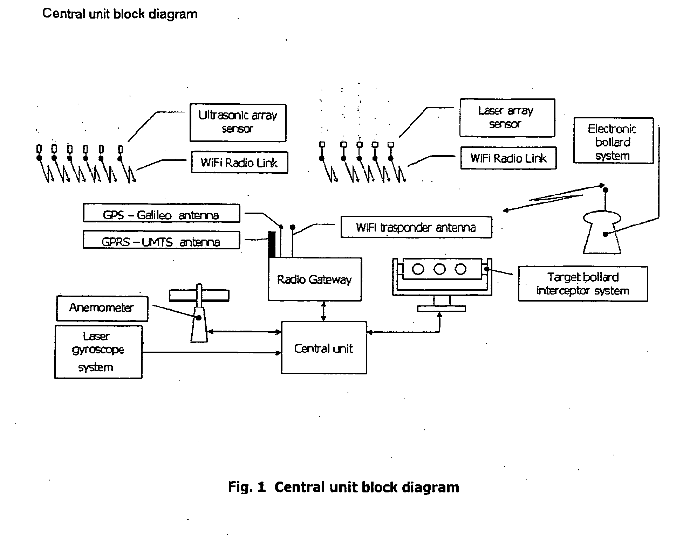

The electronic central unit (5.) is the heart of the whole system, and its block diagram is shown in Fig. 1

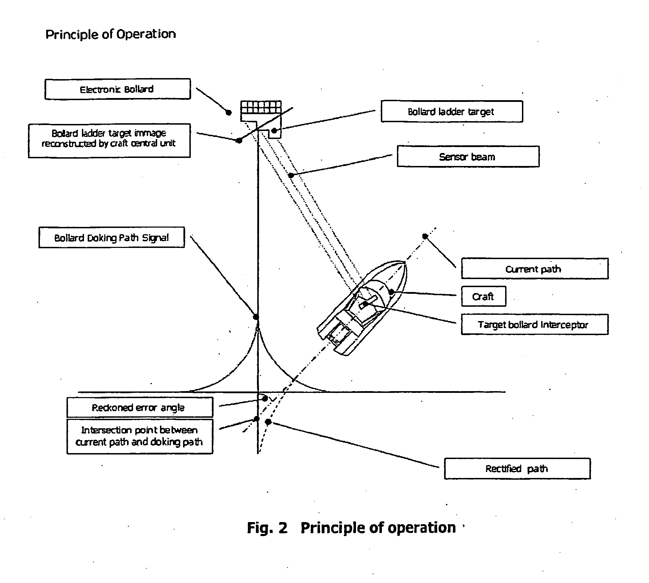

Fig. 2 , on the other hand, schematically shows the working principle of the automatic mooring system.

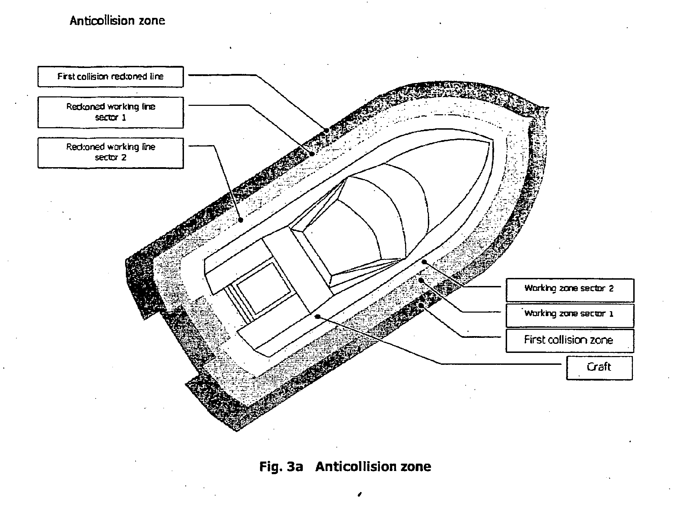

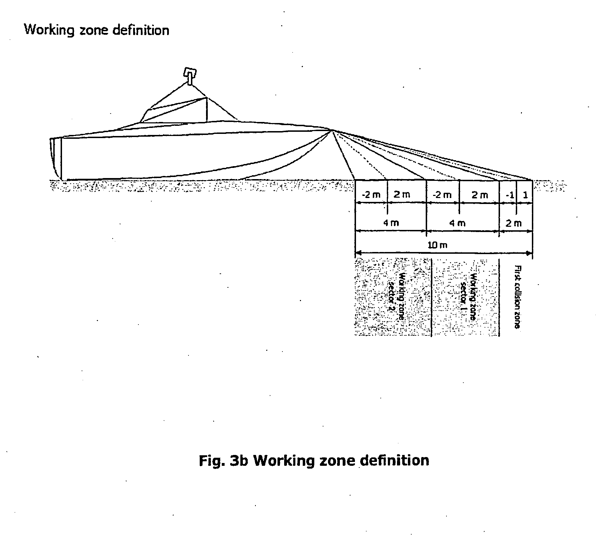

The method of interception of obstacles in the docking area and the automatic approach to the quay consists in the fulfilment of two anti-collision bands all around the shape on the surface of the water of the vessel, suitable to detect the obstacles during the low speed approach, as shown in Fig. 3 a.

The ultrasonic sensors array fulfil a first level anti-collision band, all around the shape on the surface of the water of the vessel and represents the group of sensors suitable to provide the most sharp and stable signals for the relative positioning of the vessel.

The laser sensors group, instead, is used to provide a second level anti-collision band, suitable to detect obstacles in a wider range (e.g. 20 m), all around the shape of the vessel, in order to set speed and approaching direction, resulting in a immediate reaction of the steering systems

The beam width of the ultrasonic ray of the first level sensors is able to detect obstacles of any shape and dimension with high precision in their operating range. The laser sensors are more directive and permit to fulfil a wider anti-collision band, which takes control during the manoeuvres of approach to the quay (low speed).

The interaction of the two arrays of sensors (first and second level) allows to define the position and the shapes of any obstacle during the mooring manoeuvres, with absolute fidelity with respect to the reality, providing a tridimensional view which automatically updates in real time during the whole manoeuvre. A schematic picture of the dimensions of the anti-collision bands is shown in Fig. 3b.

The use of gyroscopic electronic sensors allows to sharply establish the bow-stern direction of the vessel with respect to the approach course, providing the adequate feed-back to the electronic central unit, which sets in real time the outputs connected to the steering actuators (power drive systems). Furthermore, such a feed back permits to use the system securely even in difficult atmospheric conditions.

The approaching course to the quay is defined by means of the detection by the system of a fixed point (target position), established by an electronic "bitt" that is self powered by solar energy. The bitt is installed on the quay and is equipped with a short range radio transceiver (WI-FI type). The first information about the position of the vessel with respect to the mooring point are provided by the difference of the two GPS positions of the vessel and of the bitt (DGPS - differential GPS))

The GPS signal is used continuously during the whole manoeuvre, but its resolution is not adequate to the mooring operation: its positioning error is compensated by the other signals locally detected by the other arrays of sensors.

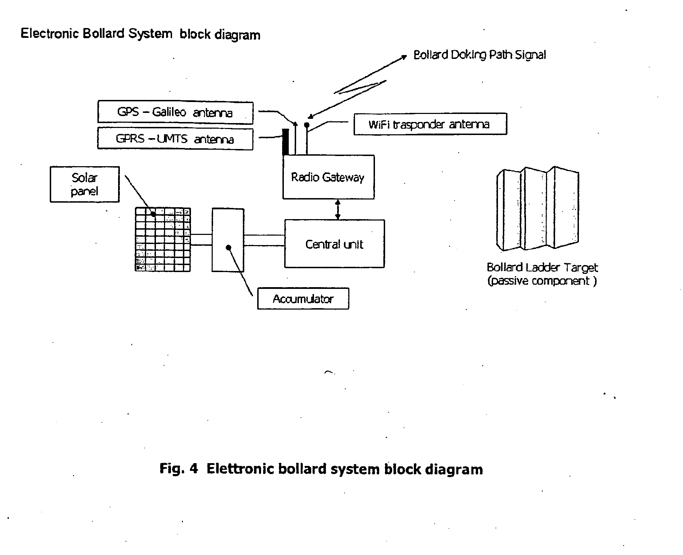

The shape of the electronic bitt fulfils a sharp reference for a further particular laser sensor, which is used for the detection of the azimuth position of the vessel with respect to the approaching course and to provide a reference to the gyroscopic sensors for the feed-back signals to the steering actuators. The functional diagram of the electronic "bitt" is shown in Fig. 4.

When it is not possible to establish any link with an electronic bitt, the automatic mooring manoeuvre can be anyway performed, in a semi-automatic operating mode.
On the basis of the position of the bitt on the quay and of the outline condition of the mooring area as an input of the system, it is possible to select the kind of mooring to be performed:
- stem
- bow
- right side
- left side

The automatic system selects the best course to approach to the quay and engages the auto-pilot mode, with anti-collision system and smooth control of the power of the controlled motors.

Furthermore it is possible to carefully define the solicitations on the vessel, regarding the driving forces, accelerations (the system is useful in any sailing condition), and to modulate the reactive forces necessary by the actuators. This technique may be refined and customized on the basis of the auxiliary propulsion means, other than the main engines, if they are already available on the vessel (e.g. water jet thrusters).

The initialisation of the system (first installation) is based on a calibration and self-tuning procedure, to be performed in open sea with good atmospheric conditions, that is suitable to define the available manoeuvre dynamics, when the automatic mooring system is engaged: driving force, steering ray as a function of the speed, stop distances, accelerations (whwn the vessel is stopped and as a function of its speed) in all directions, etc. In this way it is possible to parameterize the steering and driving systems and to set the system in order to perform the mooring manoeuvre anywhere there is enough berthing room.

The self-tuning function, furthermore, permits to initialise the system as a function of the dimensions and of the displacement of the vessel, of its steering actuators and of the relative positioning of the arrays of ultrasonic and optical sensors.

As the system is initialised and engaged, the pilot may choose, in a rich visual database, the approach condition closest to the one to be performed, or may select a local map (if available) of the harbour in which the manoeuvre has to be done. The preliminary outline conditions have to be selected: kind of mooring, presence of other vessels on the right and/or left side, approximate available room, etc.

When the mooring manoeuvre has been successfully finished, the most relevant data during the whole operation are stored into a database and may be re-used afterwards, if the same manoeuvre will be repeated in similar conditions.
The database containing the harbour maps may be updated with the better details (e.g. real time satellite maps, internet upgrades, etc.). In this way the system performs a preliminary mooring map, which is gradually detailed on the control screen, as the obstacle detection signals provide data according to the real life conditions, or generating the drawing of obstacle unexpected during the manoeuvre initialisation.

The system performs a continuous polling at high sampling rate of all the signals provided by the available sensors of position, speed and acceleration, and calculates the forces for the motor shafts necessary to approach the target position.

The control of the power to the motor shafts is done by means of two electric motors with a power defined according to the dimensions and inertial force of the vessel; the motors are driven by power drive systems which are controlled directly by the electronic central unit. (dosed loop automatic control).

The advantage of the use of electric motors consists in the improvement of the dynamics for the rotating inversion and in a better control, by means of the power drive systems, on the rotating speed of the propellers. The result is a "stronger" transfer function of the actuation of the automatic commands determined by the elaboration of the signals incoming by the position sensors' arrays.

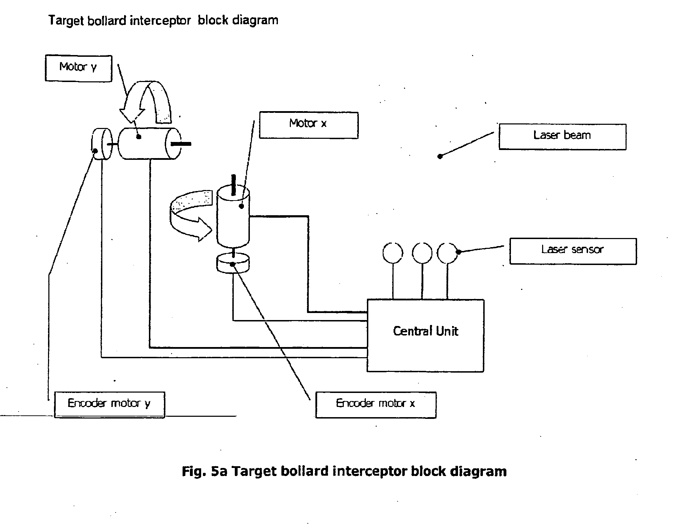

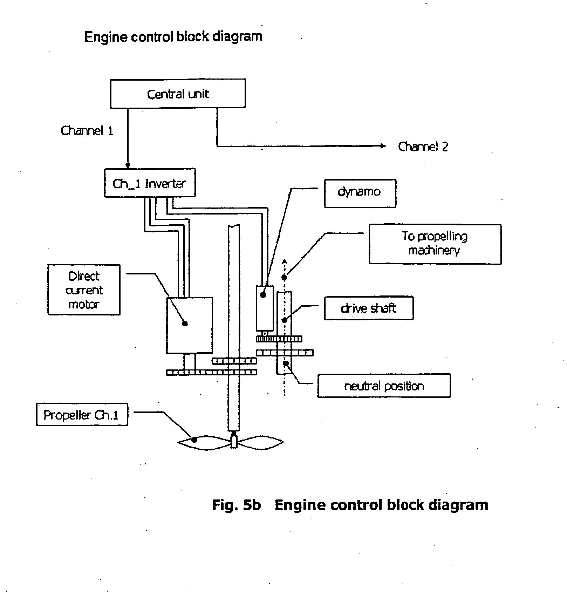

A block diagram of the interceptor system functions and of its interaction with the power drive systems is shown in Fig. 5°.

Fig. 5b shows a drawing of the electro-mechanic group for the insertion of the power drive systems.

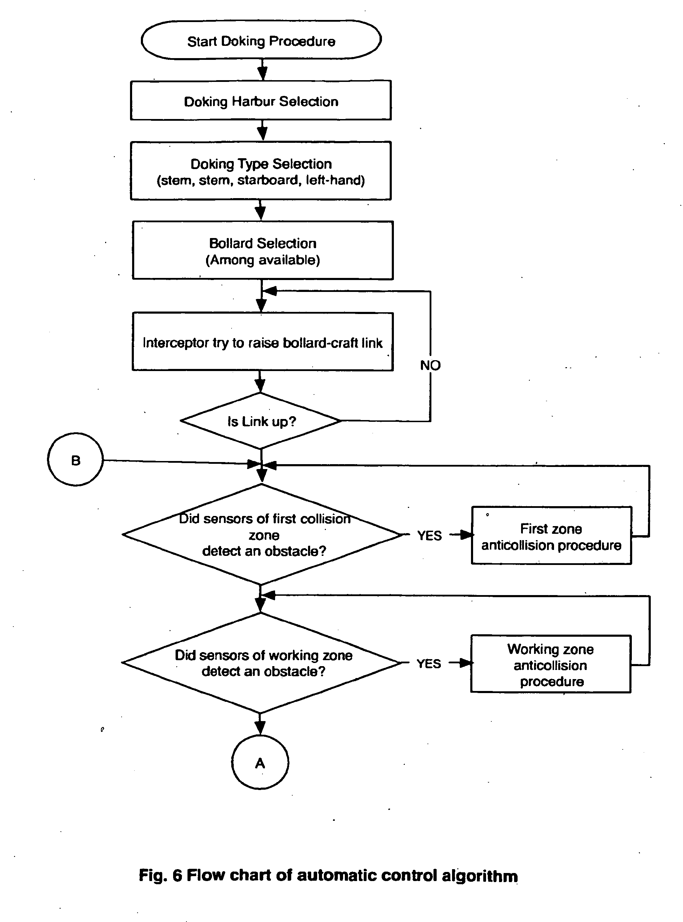

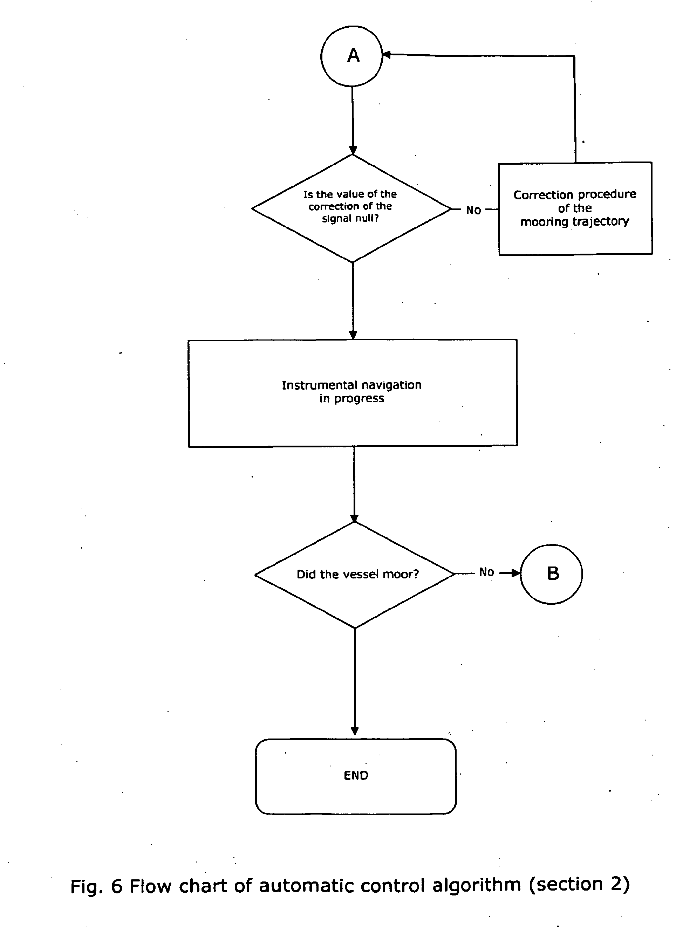

Fig. 6 shows the flow-chart of the algorithm that embodies the automatic control.

## Claims

1. Automatic mooring system for piloting recreational vessels or crafts in a harbour or in a berthing zone to a mooring point, **characterized in that** it comprises
• an electronic central unit positioned on said vessel including an electronic data acquisition unit,
• a global position system (GPS) unit,
• a radio transceiver,
• a first ultrasonic sensors array,
• a second laser sensors array and
• a target bollard interceptor system for defining an approaching course of the vessel to said mooring point by means of the detection of a plurality of target positions of the vessel,
• said electronic central unit controls a power drive system for driving at least two auxiliary asynchronous electric motors that are connected to the motor shafts of the vessel and that are inserted during the mooring manoeuvres by means of an electro-mechanic group which simultaneously is able to exclude the main engines of the vessel,
• said system comprising also an electronic bitt positioned on said mooring point equipped with a radio transceiver and with a global position system (GPS) which establishes said target position of the vessel which communicates with the radio transceiver on board of the vessel by means of a radio link, so that each position of the vessel with respect to the mooring point is provided by the difference of the two GPS position signals of the vessel and of the bitt,
• said first ultrasonic sensors array fulfils a first level anti-collision band around the shape of the vessel, and said second laser sensors array is used to provide a second level anti-collision band having a range wider than the range of said first anti-collision band, the interaction of said first and second sensors arrays allowing to define the position and the shapes of any obstacle during said mooring manoeuvres of the vessel up to said mooring point, providing a three-dimensional view which automatically updates in real time during said mooring manoeuvres,

2. Automatic mooring system as claimed in claim 1, **characterized in that** said electronic control unit is connected to a gyroscopic electronic sensors array, which are provided for establishing a bow-stern direction of the vessel with respect to said target positions of the vessel, providing a feed-back signal to said electronic central unit, which sets in real time the outputs connected to said power drive system.

3. Automatic mooring system as claimed in claim 2, **characterized in that** said electronic bitt is shaped as a bollard ladder target in order to fulfill a reference for said laser sensors, which is used for the detection of the azimuth position of the vessel with respect to said target positions of the vessel and for providing a reference to said gyroscopic sensors for said feed-back signal to the electronic central unit.

4. Automatic mooring system as claimed in claim 1, **characterized in that** said electronic control unit provides for the selection of preliminary conditions and for the visualization of a local map of said harbour or berthing zone, in which said manoeuvres has to be done.

5. Automatic mooring system as claimed in claim 1, **characterized in that** said electronic control unit has a database, in which the harbour maps and data related to said manoeuvres are stored.

## Patentansprüche

1. Automatisches Anlegesystem für das Lotsen von Freizeit-Wasserfahrzeugen oder Schiffen in einem Hafen oder in einem Liegeplatzbereich zu einem Anlegepunkt hin, **dadurch gekennzeichnet, dass** es umfasst
- eine elektronische Zentraleinheit, die auf dem Wasserfahrzeug angeordnet ist, einschließlich einer elektronischen Datenerfassungseinheit,
- eine globale Positionierungs(GPS)-Einheit,
- einen Funksendeempfänger,
- ein erstes Ultraschallsensorenfeld,
- ein zweites Lasersensorenfeld und
- ein Zielpoller-Aufnahmesystem zum Bestimmen eines Annäherungskurses des Wasserfahrzeugs an den Anlegepunkt mittels Erfassung von mehreren Zielpositionen des Wasserfahrzeugs,
- wobei die elektronische Zentraleinheit ein Leistungsantriebssystem zum Antreiben von mindestens zwei Hilfs-Asynchronelektromotoren steuert, die mit den Motorwellen des Wasserfahrzeugs verbunden sind und die während der Anlegemanöver mittels einer elektromechanischen Gruppe eingesetzt werden, welche gleichzeitig in der Lage ist, die Hauptantriebe des Wasserfahrzeugs abzutrennen,
- wobei das System auch einen an dem Anlegepunkt positionierten elektronischen Anlegepoller umfasst, der mit einem Funksendempfänger und mit einem globalen Positionierungssystem (GPS) ausgerüstet ist, welches die Zielposition des Wasserfahrzeugs festlegt, welches mittels einer Funkverbindung mit dem Sendempfänger an Bord des Wasserfahrzeugs in Verbindung steht, sodass jede Position des Wasserfahrzeugs mit Bezug auf den Anlegepunkt durch die Differenz der zwei GPS-Positionssignale des Wasserfahrzeugs und des Anlegepollers gegeben ist,
- wobei das erste Ultraschallsensorenfeld eine Kollisionsschutzzone erster Stufe um den Umriss des Wasserfahrzeugs herum verwirklicht und das zweite Lasersensorenfeld verwendet wird, eine Kollisionsschutzzone zweiter Stufe bereitzustellen, die eine Reichweite aufweist, die größer ist als die Reichweite der Kollisionsschutzzone erster Stufe, wobei es durch das Zusammenspiel des ersten und zweiten Sensorenfeldes möglich wird, die Position und die Umrisse eines beliebigen Hindernisses während der Anlegemanöver des Wasserfahrzeugs zum Anlegepunkt hin zu bestimmen, wobei eine dreidimensionale Ansicht geliefert wird, die automatisch in Echtzeit während der Anlegemanöver aktualisiert wird.

2. Automatisches Anlegesystem nach Anspruch 1, **dadurch gekennzeichnet, dass** die elektronische Steuereinheit mit einem gyroskopischen elektronischen Sensorenfeld verbunden ist, das vorgesehen ist für das Festlegen einer Bug-Heck-Richtung des Wasserfahrzeugs mit Bezug auf die Zielpositionen des Wasserfahrzeugs, wobei es der elektronischen Zentraleinheit ein Rückkopplungssignal bereitstellt, welche in Echtzeit die Ausgänge, die mit dem Leistungsantriebssystem verbunden sind, einstellt.

3. Automatisches Anlegesystem nach Anspruch 2, **dadurch gekennzeichnet, dass** der elektronische Anlegepoller als eine Pollerleiter-Zielmarke ausgebildet ist, um eine Referenz für die Lasersensoren zu verwirklichen, welche für das Ermitteln der Azimutposition des Wasserfahrzeugs mit Bezug auf die Zielpositionen des Wasserfahrzeugs und das Bereitstellen einer Referenz für die gyroskopischen Sensoren für das Rückkopplungssignal an die elektronische Zentraleinheit verwendet wird.

4. Automatisches Anlegesystem nach Anspruch 1, **dadurch gekennzeichnet, dass** die elektronische Steuereinheit für die Auswahl von Vorbedingungen und für die Visualisierung einer lokalen Karte des Hafens oder des Liegeplatzbereichs sorgt, in welchem die Manöver auszuführen sind.

5. Automatisches Anlegesystem nach Anspruch 1, **dadurch gekennzeichnet, dass** die elektronische Steuereinheit eine Datenbank aufweist, in der die Hafenkarten und die Daten, die sich auf die Manöver beziehen, gespeichert sind.

## Revendications

1. Système d'amarrage automatique pour piloter des navires ou bateaux de plaisance dans un port ou dans une zone d'accostage vers un point d'amarrage, **caractérisé en ce qu'**il comprend
- une unité centrale électronique positionnée sur ledit navire, comprenant une unité électronique d'acquisition de données,
- une unité de système de positionnement à capacité globale (GPS),
- un émetteur-récepteur radio,
- un premier réseau de capteurs à ultrasons,
- un deuxième réseau de capteurs laser et
- un système de détection de bollard cible pour définir une course d'approche du navire vers ledit point d'amarrage par la détection d'une pluralité positions cibles du navire,
- ladite unité centrale électronique commande un système d'entraînement pour commander au moins deux moteurs électriques asynchrones auxiliaires qui sont reliés aux arbres moteurs du navire et qui sont insérés durant les manoeuvres d'amarrage au moyen d'un groupe électromécanique qui est simultanément en mesure d'exclure les moteurs principaux du navire,
- ledit système comprend également une bitte électronique positionnée sur ledit point d'amarrage, équipée d'un émetteur-récepteur radio et d'un système de positionnement à capacité globale (GPS) qui établit ladite position cible du navire qui communique avec l'émetteur-récepteur radio à bord du navire par le biais d'une liaison radio, de manière que chaque position du navire par rapport au point d'amarrage soit fournie par la différence des deux signaux de position GPS du navire et de la bitte,
- ledit premier réseau de capteurs à ultrasons satisfait une première bande anticollision de niveau autour du profil du navire et ledit deuxième réseau de capteurs laser est utilisé pour fournir une deuxième bande anticollision de niveau comportant une plage plus grande que la plage de ladite première bande anticollision, l'interaction desdits premier et deuxième réseaux de capteurs permettant de définir la position et les profils de n'importe quel obstacle durant lesdites manoeuvres d'amarrage du navire jusqu'au point d'amarrage, fournissant une vue tridimensionnelle qui s'actualise automatiquement en temps réel durant lesdites manoeuvres d'amarrage.

2. Système d'amarrage automatique selon la revendication 1, **caractérisé en ce que** ladite unité électronique de commande est connectée à un réseau de capteurs électroniques gyroscopiques, lesquels sont prédisposés pour établir une direction proue-poupe du navire par rapport aux dites positions cibles du navire, fournissant un signal de rétroaction à ladite unité centrale électronique, qui détermine en temps réel les sorties connectées audit système d'entraînement.

3. Système d'amarrage automatique selon la revendication 2, **caractérisé en ce que** ladite bitte électronique est profilée comme une cible d'échelle de bollard de manière à satisfaire une référence pour lesdits capteurs laser, laquelle est utilisée pour la détection de la position d'azimut du navire par rapport aux dites positions cibles du navire et pour fournir une référence aux dits capteurs gyroscopiques pour ledit signal de rétroaction à l'unité centrale électronique.

4. Système d'amarrage automatique selon la revendication 1, **caractérisé en ce que** ladite unité centrale électronique fournit la sélection de conditions préliminaires et la visualisation d'une carte locale dudit port ou zone d'accostage, où lesdites manoeuvres doivent être effectuées.

5. Système d'amarrage automatique selon la revendication 1, **caractérisé en ce que** ladite unité centrale électronique comprend une base de données dans laquelle les cartes de port et les données relatives aux dites manoeuvres sont mémorisées.
